# EUROPEAN PATENT APPLICATION

(11) **EP 4 629 080 A1**
(43) Date of publication of application: **08.10.2025**
(21) Application number: 24899155.6
(22) Date of filing: 30.05.2024
(51) Int. Cl.: G06F 9/50

(54) **TASK PROCESSING METHOD AND APPARATUS, AND DEVICE AND STORAGE MEDIUM**

(30) Priority: 04.12.2023 CN 202311644046
(71) Applicant: Hygon Information Technology Co., Ltd., Tianjin 300392 (CN)
(72) Inventor: DAI, Kaiyong, Tianjin 300392 (CN); LI, Kai, Tianjin 300392 (CN); CHEN, Qing, Tianjin 300392 (CN); ZHANG, Junwei, Tianjin 300392 (CN); YANG, Yi, Tianjin 300392 (CN); YANG, Tao, Tianjin 300392 (CN); PAN, Yu, Tianjin 300392 (CN)
(74) Representative: Maiwald GmbH
(86) International application number: PCT/CN2024/096229
(87) International publication number: WO 2025/118503

(57) **Abstract**

Provided in the present disclosure are a task processing method and apparatus, and a device and a storage medium. The method comprises: determining a first computational density level used for processing one or more tasks; within a first time period before the one or more tasks are processed, gradually increasing the computational density of a computing unit to the first computational density level, which computing unit is used for processing the one or more tasks; processing the one or more tasks by means of the computing unit; and within a second time period after the processing of the one or more tasks is completed, gradually reducing the computational density of the computing unit to a second computational density level.

## Description

This application claims the priority of Chinese Patent Application No. 202311644046.2 filed on December 4, 2023, the disclosure of which is incorporated by reference herein in its entirety as part of the present application.

### TECHNICAL FIELD

Embodiments of the present disclosure relate to a method, a device, an apparatus and a storage medium for task processing.

### BACKGROUND

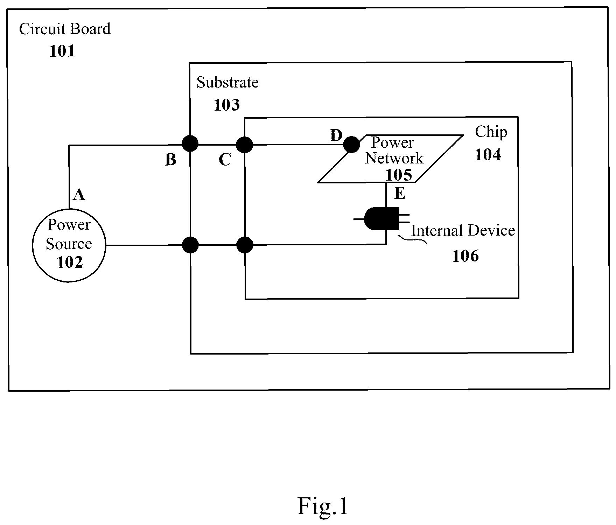

A typical scenario of supplying power to a chip is as shown in Fig. 1, power output by a power source 102 enters into a substrate 103 of the chip via an internal trace AB of a circuit board 101, then enters into the chip 104 via a power connection line BC between the substrate and a chip pin, and is connected to a power network 105 through a power trace CD within the chip. An internal device 106 of the chip is connected with the power network 105 through a connection line E via a power pin of the device to acquire power. When the chip has a small load or no load, the power source can provide stable voltage output that all act on the internal device of the chip. However, when the load of the chip is increased suddenly, a voltage on the internal device of the chip might drop sharply for the following two reasons.
1) A sudden increase in the load of the chip might cause a current slope (DIDT) on the chip to increase, and energy required by the chip will increase. The power source requires a certain response time to answer to a request of suddenly increasing energy. Due to a too large DIDT (i.e., the current changes too fast), there might be not enough time for the power source to provide sufficient energy within a short time to meet the requirement of the chip.
2) The load of the chip increases. The current increases sharply. The internal resistance of the chip decreases. A voltage on the internal device will decrease.

The above two reasons usually occur at the same time, leading to a reduction in power supply voltage of the internal device of the chip and an increase in time delay of the device and resulting in a setup time of a register in a critical path being not satisfied. Thus, the chip failure may be caused. By further analysis, the main reason of the too large DIDT is synchronously enabling of multiple cores during multi-core computing such that the current rises sharply within a short time.

Therefore, there is a need for a method for effectively addressing the problem that a current slope (DIDT) of a chip is too large during task processing.

### SUMMARY

The summary is provided to introduce concepts briefly, and these concepts will be described in detail in the following detailed description. The summary is neither intended to indicate the key features or essential features of the claimed technical solutions nor meant to limit the scope of the claimed technical solutions.

An embodiment of the present disclosure provides a method for task processing, the method for task processing comprises: determining a first computing density level for processing one or a plurality of tasks; gradually increasing a computing density of a computing unit for processing the one or plurality of tasks to the first computing density level within a first time period before processing the one or plurality of tasks; processing the one or plurality of tasks by the computing unit; and gradually reducing the computing density of the computing unit to a second computing density level within a second time period after completion of processing the one or plurality of tasks.

According to the embodiment of the present disclosure, the determining the first computing density level for processing the one or plurality of tasks comprises: determining a classified statistic number of instructions to be processed comprised in the one or plurality of tasks according to a predetermined category; and determining the first computing density level for processing the one or plurality of tasks based on the classified statistic number.

According to the embodiment of the present disclosure, the predetermined category comprises one or more of: a low-density operation instruction, a medium-and-low-density operation instruction, a medium-density operation instruction, a medium-and-high-density operation instruction, and a high-density operation instruction.

According to the embodiment of the present disclosure, the method further comprises: gradually increasing the computing density of the computing unit to a preset third computing density level within a third time period prior to the first time period.

According to the embodiment of the present disclosure, the first time period is a time period for acquiring the instructions to be processed comprised in the one or plurality of tasks.

According to the embodiment of the present disclosure, the gradually increasing a computing density of a computing unit for processing the one or plurality of tasks to the first computing density level within a first time period before processing the one or plurality of tasks comprises: within the first time period, successively providing the computing unit with one or more pieces of first preset data having gradually increasing computing densities for processing by the computing unit, wherein a first piece of first preset data of the one or more pieces of first preset data corresponds to a current computing density level of the computing unit, and a last piece of first preset data of the one or more pieces of first preset data corresponds to the first computing density level.

According to the embodiment of the present disclosure, the one or more pieces of first preset data are prestored in a database.

According to the embodiment of the present disclosure, the gradually reducing the computing density of the computing unit to a second computing density level within a second time period after completion of processing the one or plurality of tasks comprises: within the second time period, successively providing the computing unit with one or more pieces of second preset data having gradually decreasing computing densities for processing by the computing unit, wherein a first piece of second preset data of the one or more pieces of second preset data corresponds to the current computing density level of the computing unit, and a last piece of second preset data of the one or more pieces of second preset data corresponds to the second computing density level.

According to the embodiment of the present disclosure, the one or more pieces of second preset data are prestored in a database.

According to the embodiment of the present disclosure, the method further comprises: when one or more new tasks arrive within the second time period, stopping gradually reducing the computing density; and gradually increasing the computing density of the computing unit to a fourth computing density level within a fourth time period starting from a time of stopping gradually reducing the computing density, wherein the fourth computing density level is a computing density level for processing the one or more new tasks.

An embodiment of the present disclosure provides a device for task processing, the device comprises: a determination unit, configured to determine a first computing density level for processing one or more tasks; a first warming-up unit, configured to gradually increase a computing density of a computing unit for processing the one or more tasks to the first computing density level within a first time period before processing the one or more tasks; a computing unit, configured to process the one or more tasks by the computing unit; and a stretching unit, configured to gradually reduce the computing density of the computing unit to a second computing density level within a second time period after completion of processing the one or more tasks.

According to the embodiment of the present disclosure, the determination unit is configured to determine the first computing density level for processing one or more tasks, which comprises: determining a classified statistic number of instructions to be processed comprised in the one or more tasks according to a predetermined category; and determining the first computing density level for processing the one or more tasks based on the classified statistic number.

According to the embodiment of the present disclosure, the predetermined category comprises one or more of: a low-density operation instruction, a medium-and-low-density operation instruction, a medium-density operation instruction, a medium-and-high-density operation instruction, and a high-density operation instruction.

According to the embodiment of the present disclosure, the device further comprises a second warming-up unit, which is configured to gradually increase the computing density of the computing unit to a preset third computing density level within a third time period prior to the first time period.

According to the embodiment of the present disclosure, the first time period is a time period for acquiring the instructions to be processed comprised in the one or more tasks.

According to the embodiment of the present disclosure, the first warming-up unit is configured to gradually increase the computing density of the computing unit for processing the one or more tasks to the first computing density level within the first time period before processing the one or more tasks, which comprises: within the first time period, successively providing the computing unit with one or more pieces of first preset data having gradually increasing computing densities for processing by the computing unit, wherein a first piece of first preset data of the one or more pieces of first preset data corresponds to a current computing density level of the computing unit, and a last piece of first preset data of the one or more pieces of first preset data corresponds to the first computing density level.

According to the embodiment of the present disclosure, the stretching unit is configured to gradually reduce the computing density of the computing unit to the second computing density level within the second time period after completion of processing the one or more tasks, which comprises: within the second time period, successively providing the computing unit with one or more pieces of second preset data having gradually decreasing computing densities for processing by the computing unit, wherein a first piece of second preset data of the one or more pieces of second preset data corresponds to the current computing density level of the computing unit, and a last piece of second preset data of the one or more pieces of second preset data corresponds to the second computing density level.

According to the embodiment of the present disclosure, the stretching unit is further configured to: when one or more new tasks arrive within the second time period, stop gradually reducing the computing density; and the first warming-up unit is further configured to: gradually increase the computing density of the computing unit to a fourth computing density level within a fourth time period starting from a time of stopping gradually reducing the computing density, wherein the fourth computing density level is a computing density level for processing the one or more new tasks.

An embodiment of the present disclosure provides a device for task processing, the device for task processing comprises: at least one processor; and a memory on which at least one program is stored, wherein the at least one program, when executed by at least one processor, causes the at least one processor to implement the method according to an embodiment of the present disclosure.

An embodiment of the present disclosure provides an electronic apparatus, the electronic apparatus comprising the device for task processing according to an embodiment of the present disclosure.

An embodiment of the present disclosure provides a non-transient storage medium comprising computer executable instructions, and the computer executable instructions, when executed by a computer processor, are used to perform the method according to an embodiment of the present disclosure.

The method, device, and apparatus provided by the present disclosure can effectively addressing the problem that the system performance is affected due to a too large current slope (DIDT)of a chip during task processing.

### BRIEF DESCRIPTION OF DRAWINGS

The above and other features, advantages, and aspects of the embodiments of the present disclosure will become more apparent in conjunction with the attached drawings and with reference to the specific embodiments below. Throughout the drawings, identical or similar reference number denotes identical or similar element. It should be understood that the drawings are schematic and that the members and elements are not necessarily drawn according to the scale.
Fig. 1 illustrates a scenario of supplying power to a chip;
Fig. 2 illustrates a schematic diagram of a general-purpose computing multi-core processor according to an embodiment of the present disclosure;
Fig. 3 illustrates a current of a general-purpose computing multi-core processor in a running process;
Fig. 4 illustrates a schematic diagram of an improved general-purpose computing multi-core processor according to an embodiment of the present disclosure;
Fig. 5 illustrates a schematic flowchart of counting unfinished tasks according to an embodiment of the present disclosure;
Fig. 6 illustrates exemplary classification of instructions according to power consumption of an instruction in an embodiment of the present disclosure;
Fig. 7 illustrates a schematic flowchart of counting instructions to be processed of a particular category in an unfinished task according to an embodiment of the present disclosure;
Fig. 8 illustrates a schematic diagram of a source of data acquired by a computing unit according to an embodiment of the present disclosure;
Fig. 9 illustrates an example decision-making mechanism of a DIDT control unit according to an embodiment of the present disclosure;
Fig. 10 illustrates an example control process of a control core according to an embodiment of the present disclosure;
Fig. 11 illustrates an example of an immediate value database according to an embodiment of the present disclosure;
Fig. 12 illustrates a chart of a current of a computing unit changing over time at a warming-up stage according to an embodiment of the present disclosure;
Fig. 13 illustrates a current of a computing unit in a running process after processing by a DIDT control unit according to an embodiment of the present disclosure;
Fig. 14 illustrates a method for task processing according to an embodiment of the present disclosure;
Fig. 15 illustrates a schematic diagram of a device for task processing according to an embodiment of the present disclosure; and
Fig. 16 illustrates a schematic diagram of another device for task processing according to an embodiment of the present disclosure.

### DETAILED DESCRIPTION

Embodiments of the present disclosure are described in more detail below with reference to the attached drawings. Although some embodiments of the present disclosure are shown in the attached drawings, it should be understood that the present disclosure may be implemented in various forms and should not be interpreted as limited to the embodiments set forth herein, but rather are provided for a more thorough and complete understanding of the present disclosure. It should be understood that the drawings and embodiments of the present disclosure are for illustrative purposes only and are not intended to limit the protection scope of the present disclosure.

It should be understood that the various steps described in the method embodiments of the present disclosure may be executed in different order and/or in parallel. In addition, method embodiments may include additional steps and/or omit the steps shown by the execution. The scope of the present disclosure is not limited in the respect.

The term "including" as used herein and its variations are open-ended including, i.e., "including but not limited to". The term "based on" means "at least partially based on". The term "an embodiment" means "at least one embodiment"; The term "another embodiment" means "at least one other embodiment"; The term "some embodiments" means "at least some embodiments". Definitions of other terms are given in the description below.

It needs to be noted that "first", "second" and other concepts mentioned in the present disclosure are used only to distinguish different devices, modules or units and are not used to define the order or interdependent relation of the functions performed by these devices, modules or units.

It needs to be noted that modifiers of "one" and "a plurality of" mentioned in the present disclosure are schematic rather than restrictive, and it should be understood by those skilled in the art that they is understood as "one or a plurality of" unless otherwise defined in the context.

Before describing the embodiments of the present disclosure, some technical terms that might be involved in the present disclosure are explained first.

PVT represents a process, a voltage, and a temperature of a chip.

DIDT represents a change rate of a current over time. The greater a current change amplitude and/or the shorter a change time, the greater the DIDT.

IR Drop represents a voltage droop, which may refer in particular to a voltage output of a power source for a chip being below a specified requirement and/or an overall voltage droop generated between an output of the power source and a power source for a chip transistor due to a too large instantaneous DIDT.

In the present disclosure, multiple cores may refer to a plurality of computing units. In some embodiments, one core may be one computing unit. In some embodiments, one core may also be a combination of a plurality of computing units.

The problem of disabling a chip caused by DIDT may be solved by using the following several techniques.
1. Estimating a voltage droop during a serious DIDT, increasing an output voltage of a power source on a chip board, guaranteeing that the power supplied to an internal device of the chip still meets the minimum power supply requirement in case of the serious DIDT.
2. Voltage droop detection and clock stretching are introduced into the chip, an amplitude of clock stretching is set according to an amplitude of voltage droop detection, thereby reducing a clock frequency and reducing a load of the chip. Thus, a voltage droop can be relieved.
3. A module for automatically estimating a current load is added within the chip. When the load increases sharply, a data processing unit in chip is gated to reduce task assignment, thereby reducing the load of the chip so as to relieve the DIDT.
4. For a multi-core processing system, when the chip is enabled, time of enabling multiple cores are controlled such that the multiple cores are gradually enabled, avoiding generation of a large current.

The above techniques can alleviate the problem of a voltage droop caused by a DIDT to a certain extent, thereby avoiding the chip failure. However, there are some disadvantages as follows.

For #1, since the power supplied to the chip is increased, an increase in power consumption of the chip may be caused. When the load decreases sharply, the voltage of the internal device of the chip may rise, inducing a voltage overshoot. The internal device of the chip is at a risk of being burned out.

For #2, it is not easy to determine a relationship between the amplitude of voltage droop detection and the amplitude of clock stretching within the chip. When the relationship is too rough, the amplitude of clock stretching may be too large, thereby causing a performance loss. Meanwhile, an individual difference between chips is not taken into account. In some particular cases, when a spread spectrum clocking (SSC) is turned on, the clock stretching might be disabled.

For #3, reducing task assignment according to a load change according to a load change might cause a reduction in system performance when the DIDT occurs.

For #4, the problem of the DIDT can be well controlled. However, a performance loss might be caused because multiple cores can all start to run after a period of time.

In order to address the problem that a reduction in performance of the chip might be caused due to a too large DIDT, the present disclosure proposes an adaptive DIDT solution of a general-purpose computing multi-core processor on the basis of further analyzing hardware. According to the method of the present disclosure, based on task assignment situation, a computing unit may be "warmed-up" during fetching an instruction and/or data by each core (i.e., before an actual computing task is formally started, a high current consumption state or computing density level is gradually obtained in advance, which may also be referred to as a prestart of the computing unit herein). After the data is fetched, the computing unit is directly switched to the computing task for computing. In the entire computing process, a state of the computing unit is adaptively adjusted according to a state of task assignment, and the current consumption state or computing density level of the computing unit is reduced gradually and slowly after the computing task is finished. Thus, "warming-up" of the state of the computing unit can be carried out first before the actual computing task is formally started, and "stretching" of the state of the computing unit can be carried out after the computing task is finished. Since "warming-up" time and "stretching" time belong to spare time of fetching instructions and/or data by the computing unit, not only can the problem of a too large DIDT be solved, but also a reduction in performance of the chip may not be caused. Herein, the (running) state of the computing unit may refer to a current, power consumption, a computing density, and an equivalent thereof, of the computing unit. Moreover, herein, the computing density may refer to an instantaneous current or instantaneous power consumption when the computing unit performs a computation (e.g., an instruction or a task).

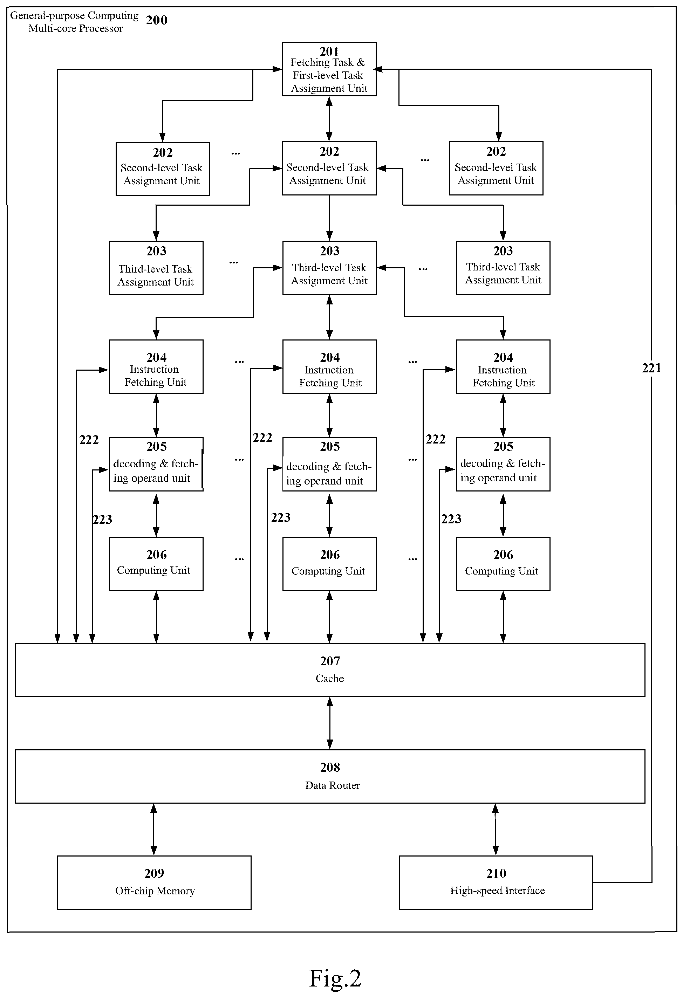

Fig. 2 illustrates a schematic diagram of a general-purpose computing multi-core processor 200 according to an embodiment of the present disclosure.

As shown in Fig. 2, the general-purpose computing multi-core processor 200 mainly includes a fetching task & first-level task assignment unit 201, a second-level task assignment unit 202, a third-level task assignment unit 203, a instruction fetching unit 204, a decoding & fetching operand unit 205, a computing unit 206, a cache 207, a data router 208, an off-chip memory 209, and a high-speed interface 210, etc. The structure as shown in Fig. 2 is merely an example. The general-purpose computing multi-core processor 200 may further include more or less units than those in Fig. 2. For example, in other embodiments, less than three levels of task assignment units or more than three levels of task assignment units may be included, which will not be limited herein. An example workflow of the general-purpose computing multi-core processor 200 is as follows.
1) After a chip is enabled, the processor (e.g., a CPU) writes a task to be executed (including an instruction and/or related data) to the off-chip memory 209 through the high-speed interface 210 (e.g., PCIE), and notifies the fetching task & first-level task assignment unit 201 through an internal connection line 221.
2) After receiving a notification, the fetching task & first-level task assignment unit 201 fetches a task according to a notification address (herein, the task fetched by the fetching task & first-level task assignment unit 201 may be referred to as a general task or a first-level task or a first task, or a task set including one or a plurality of tasks), and splits and assigns the first-level task according to resource utilization information fed back by the second-level task assignment unit, and sends assigned second-level tasks to a plurality of second-level task assignment units 202.
3) The second-level task assignment unit 202 further splits and assigns the second-level task according to resource utilization condition fed back by the third-level task assignment units 203, and distributes split third-level tasks to a plurality of third-level task assignment units 203.
4) After accepting a task, the third-level task assignment unit 203 assigns the third-level task to a plurality of different instruction fetching units 204 according to resource utilization condition fed back by the instruction fetching units 204. One instruction fetching unit 204 might be assigned one or a plurality of tasks (which may also be referred to as a second task herein) according to resource allocation condition (which may be described by taking wave as an example herein).
5) The instruction fetching unit 204 fetches a corresponding instruction through a fetching instruction bus 222 according to an address of the task assigned by the third-level task assignment unit. Instructions of a plurality of tasks may be fetched by polling, and sent to the decoding & fetching operand unit 205.
6) The decoding & fetching operand unit 205 decodes the instruction and reads data of the cache 207 through an internal bus 223. If the required data is stored in the cache 207 (which may be alternatively referred to a cache hit), the data is directly fed back. If there is no required data in the cache 207, the cache 207 reads data of the off-chip memory 209 by the data router 208 into the cache and feeds back the data to the decoding & fetching operand unit 205.
7) After all the data has been ready, the decoded instruction is sent to the computing unit 206 for computing, and a computing result may be written to the cache 207.
8) The cache 207 may further write the computing result to the off-chip memory 209.
9) After the fetching task & first-level task assignment unit 201 detects that all the assigned tasks have been finished, an interruption may be generated and reported to the CPU through the high-speed interface 210. The CPU may read the computing result through the high-speed interface after receiving and parsing the interruption.

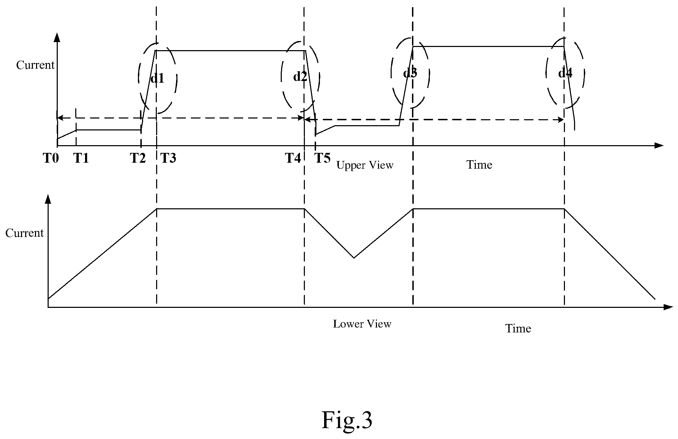

Fig. 3 illustrates a current of a general-purpose computing multi-core processor 200 in a running process. As shown in an upper view of Fig. 3, the computation of a task set (which may include one or a plurality of tasks executed on the same computing unit) might involve a process of T0-T5 as shown. Specific process analysis of current changing is as follows.

After the chip is enabled, the workflow of the above steps 1) to 5) is performed.

At T0, at the initial chip, the cache 207 is empty and is not hit, the fetching data process of the above step 6) is performed. Compared with T0, during the process, a current slightly increases, but the overall current is small (between T1 and T2).

Between T2 and T3, all the data (e.g., a last piece of data on which a computing task relies) arrives in an adjacent small time window. Thousands of computing units might simultaneously start working within a very short time window, and the current rises sharply (d1).

Between T3 and T4, after the computing power of the computing unit is fully utilized, the current reaches a very large value and is maintained at this value. The current may fluctuate to a small extent according to different specific values calculated, but may have a high overall value.

Between T4 and T5, when the computing task is finished, all the computing units finish computations almost at the same time, and the current starts to drop sharply (d2).

After computation is finished, a computing completion may be reported through an interruption.

After the computation of one task set is finished, the computation of next task set may be started, and the above processes are repeated.

As shown in Fig. 3, a too large DIDT in the computing process of one task set usually occurs at start (e.g., d1 or d3) and end (e.g., d2 or d4) stages. In the entire computing process, since the utilization efficiency of computing resources may generally be more than 90%, only the problem of the current changing too fast at the start and the end of execution of the task set needs to be solved, and the problem of the too large DIDT can be effectively solved by controlling the utilization of the computing resources during intermediate computing.

For these problems, the present disclosure proposes that: after determining that there is a computing task, the computing unit is "warmed-up" by using a set of preset data during preparing data, to ensure that the current is slowly increased to a current level or computing density level required by computation before data arrives. After the computation is finished, the computing unit is not allowed to finish running immediately. Instead, the running state of the computing unit is "stretched" by a set of preset data, thereby ensuring that the current (or computing density) of the chip is slowly transitioned to a low current level (or low computing density level).

Moreover, if next computing task (e.g., next task set) is coming when the above stretching process is not finished, "stretching" may be finished immediately and switched to "warming-up" of next task set, and a new warming-up level may be determined according to the condition of instruction included in next task set, etc.

By the above means, a current change result may be as shown in the lower view of Fig. 3. The problem of a too large DIDT is solved in design.

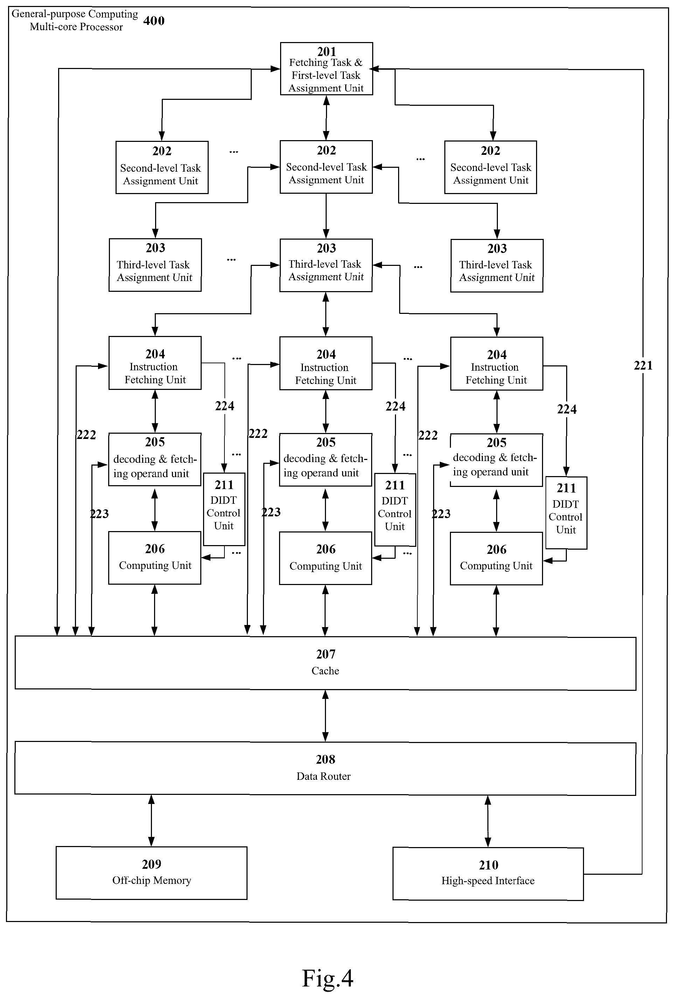

A further improvement is made to a processor architecture in an embodiment of the present disclosure. Specifically, Fig. 4 illustrates a schematic diagram of an improved general-purpose computing multi-core processor 400 according to an embodiment of the present disclosure. A main improvement will be described below.

As shown in Fig. 4, the general-purpose computing multi-core processor 400 adds a DIDT control unit 211 for each path of computing unit.

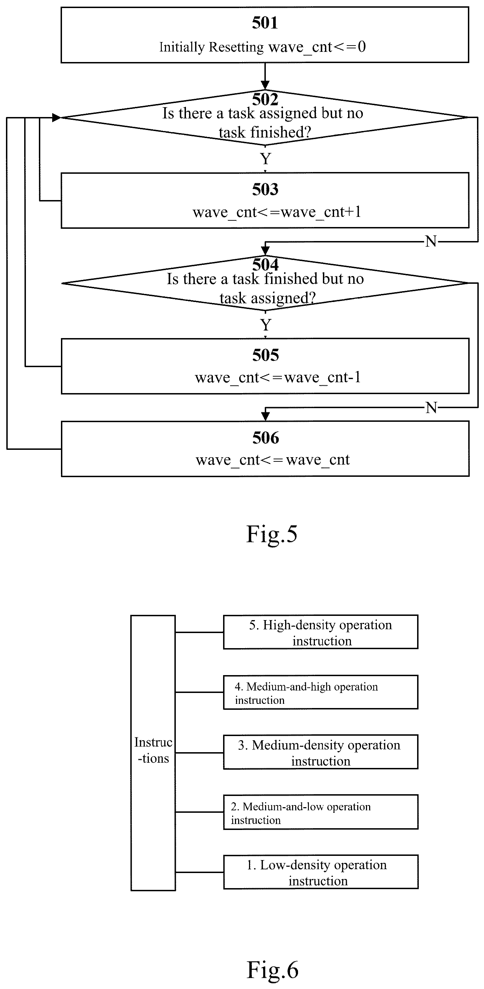

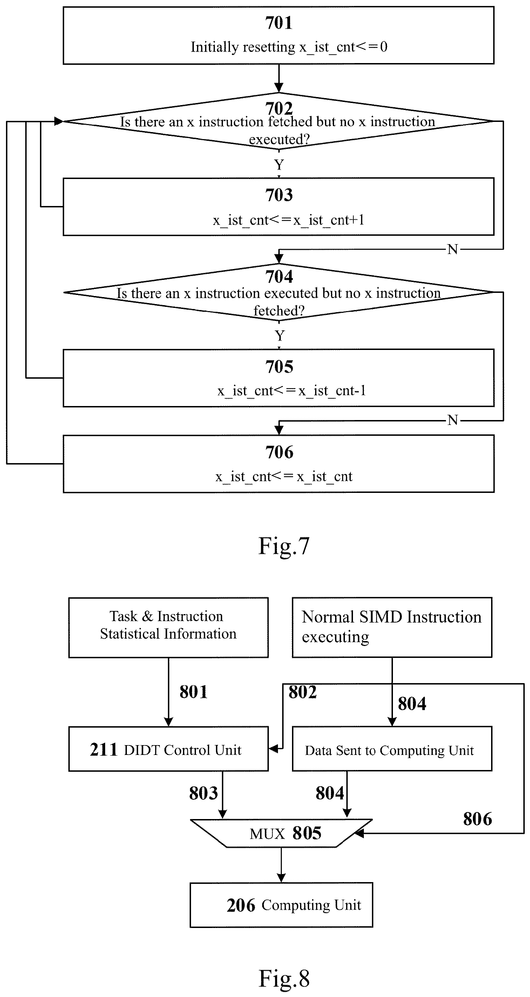

An input 224 of the DIDT control unit 211 is from an instruction fetching unit 204, including a count (as shown in Fig. 5) of tasks unfinished (or tasks to be processed) by a single instruction multiple data (SIMD) structure of this path (the instruction fetching unit 204, a decoding & fetching operand unit 205, and a computing unit 206) and classified counting information of power consumption (as shown in Fig. 6 and Fig. 7) of a fetched instruction to be processed in each task. An output of the DIDT control unit 211 directly controls the computing unit 206. A specific control manner is as shown in Fig. 8.

Fig. 5 illustrates a schematic flowchart of counting unfinished tasks according to an embodiment of the present disclosure.

As shown in Fig. 5, initial resetting is performed in block 501, and a task count wave_cnt is assigned 0.

In block 502, whether there are a task assigned and a task finished is checked in each clock cycle. If there is only a task assigned but no task finished, the task count wave_cnt is incremented by 1 in block 503; otherwise, the process proceeds to block 504. In block 504, if there is only a task finished but no task assigned, the task count wave_cnt is decremented by 1 in block 505; otherwise, the process proceeds to block 506, and the task count wave_cnt remains unchanged. Counting of next clock cycle is then carried out.

By counting, a number of tasks that have not been finished currently may be known from the task count wave_cnt. The wave_cnt may be output to the DIDT control unit 211.

Classified statistical counts of instructions to be processed (or unfinished) fetched for each task according to predetermined categories are as shown in Fig. 6 and Fig. 7.

Specifically, Fig. 6 illustrates exemplary classification of instructions according to power consumption of an instruction (or according to a computing density level required for executing the instruction) in an embodiment of the present disclosure. As shown in Fig. 6, according to power consumption of an instruction or a computing density level required for executing the instruction, instructions may be classified into 5 categories, namely a low-density operation instruction, a medium-and-low-density operation instruction, a medium-density operation instruction, a medium-and-high-density operation instruction, and a high-density operation instruction. It should be appreciated that the categories shown in Fig. 6 are merely examples. In other embodiments, there may be more or less categories, or any other categories.

The instructions to be processed of each task may respectively be statistically counted according to each category. A statistical method may be similar to the task counting statistic as shown in Fig. 5. A schematic flowchart is as shown in Fig. 7.

Specifically, Fig. 7 illustrates a schematic flowchart of counting instructions to be processed of a special category in an unfinished task according to an embodiment of the present disclosure.

As shown in Fig. 7, taking an x instruction (the x instruction may be for example any of the above five instruction categories) as an example, initial resetting is performed in block 701, and an x instruction count x_ist_cnt is assigned 0. In block 702, whether there are an x instruction fetched and an x instruction executed is checked in each clock cycle. If there is only an x instruction fetched but no x instruction executed, the x instruction count x_ist_cnt is incremented by 1 in block 703; otherwise, the process proceeds to block 704. In block 704, if there is only an x instruction executed but no x instruction fetched, the x instruction count x_ist_cnt is decremented by 1 in block 705; otherwise, the process proceeds to block 706, and the x instruction count x_ist_cnt remains unchanged. Counting of next clock cycle is then carried out.

Statistical processes shown in Fig. 5 and Fig. 7 may be performed in the instruction fetching unit 204. The instruction fetching unit 204 may send all statistical results (for example, a statistical count of unfinished tasks and a classified statistical count of instructions to be processed in each task) to the DIDT control unit 211. Different tasks may be distinguished by corresponding task identifiers wave_id. Information sent together with the statistical results may further include wave_id (e.g., wave_cur_id) of a task that is being currently executed and wave_id (e.g., wave_nxt_id) of next task (or a plurality of subsequent tasks) to be switched to (or executed), etc.

The DIDT control unit 211 processes the received statistical results or statistical information, and then outputs preset data (e.g., an immediate value) to the computing unit 206 for "warming-up" and "stretching" of the running state of the computing unit 206 after processing.

Fig. 8 illustrates a schematic diagram of a data source acquired by a computing unit according to an embodiment of the present disclosure. As shown in Fig. 8, data obtained by the computing unit 206 may be from two sources. The DIDT control unit 211 processes statistical information 801 (e.g., task and instruction statistical information) sent thereto, and generates an immediate value 803 to be provided to the computing unit 206 for processing in combination with a condition of an instruction that is being processed by the current computing unit (e.g., a condition of instruction 802 when a normal SIMD instruction is executed). The immediate value and data 804 sent during execution of the normal SIMD instruction may be selected (e.g., by a multiplexer (MUX) 805). A selection control signal 806 may be from an indication signal of execution of the normal SIMD instruction. When a normal SIMD instruction is executed, the selection control signal 806 instructs the multiplexer 805 to select the data 804 which is sent during the execution of the normal SIMD instruction to enter the computing unit 206 such that a normal computing task is executed. Otherwise, the selection control signal 806 instructs the multiplexer 805 to select the immediate value 803. At this point, the data of the computing unit 206 is from the DIDT control unit 211. By using priority selection manner, it can be guaranteed that the performance of the computing unit 206 in normal operation is not affected by the DIDT control unit 211.

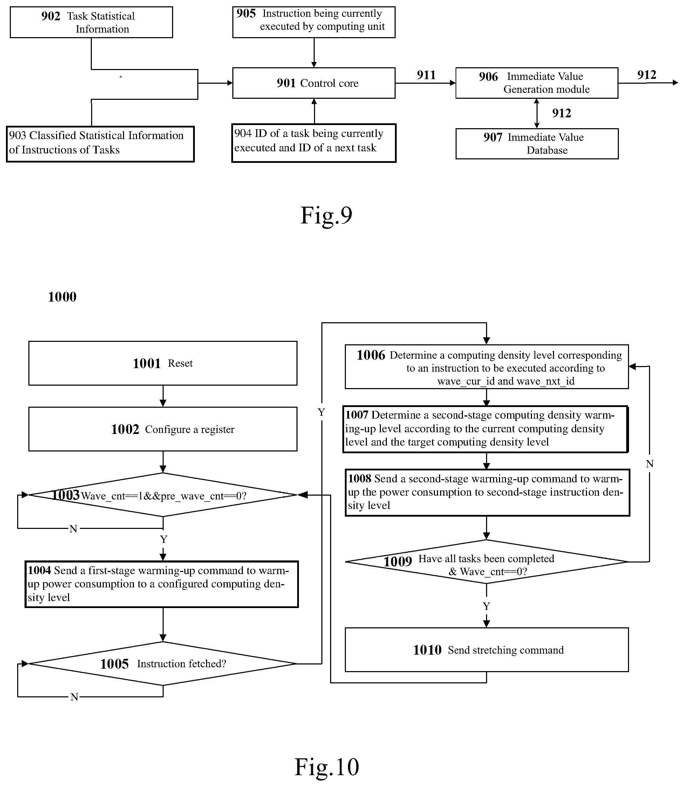

Fig. 9 illustrates an example decision-making mechanism of a DIDT control unit 211 according to an embodiment of the present disclosure.

As shown in Fig. 9, a control core 901 of the DIDT control unit 211 receives all types of information, including task statistical information 902, classified statistical information 903 of instructions of tasks, an identifier wave_cur_id of a task that is being currently executed and an identifier wave_nxt_id of a task to be executed subsequently (904), an instruction 905 that is being currently executed by the computing unit, etc. The control core 901 outputs a control command 911 to an immediate value generation module 906 by using processing and determining. The immediate value generation module 906 searches in an immediate value database 907 according to the command 911 to obtain data 912 (e.g., one or more immediate values). The immediate value generation module 906 then sends the data 912. A specific manner of sending the data 912 will be described below. In some embodiments, one or more of the control core 901, the immediate value generation module 906, and the immediate value database 907 may be included in the DIDT control unit 211. In some other embodiments, one or more of the immediate value generation module 906 and the immediate value database 907 may also be module(s) separated from and communicatively coupled with the DIDT control unit 211.

Fig. 10 illustrates an example control process 1000 of a control core 901 according to an embodiment of the present disclosure.

As shown in Fig. 10, in step 1001, the system is reset. After the system is reset, a register may be configured in step 1002. For example, numbers of clock cycles required by warming-up at a first stage and warming-up at a second stage and by a stretching stage (a time length of each stage) may be configured. A task may be then waited in step 1003. For example, as shown in Fig. 10, whether a task arrives currently may be determined by determining the task count wave_cnt=1 and the previous task count pre_wave_cnt=0.

After a task arrives, a first-stage warming-up command may be sent in step 1004 to increase power consumption (equivalently, or a current or a computing density) of the computing unit to a configured computing density level (which may also be referred to as a third computing density level herein). An increased computing density level expected by warming-up at the first stage may be preconfigured. By setting the warming-up at the first stage before warming-up at the second stage as described below, the running state of the computing unit may be gradually increased to the preset computing density level more early. The processing efficiency is improved while the problem of a too large DIDT is solved.

In some embodiments, a format of the first-stage warming-up command may be {current computing density level code, target computing density level code, number of clock cycles required}. In some embodiments, corresponding to the five instruction categories shown in Fig. 6, computing density levels may be classified and coded into 5 categories, e.g., a low computing density level (a corresponding code may be 1), a medium-and-low computing density level (a corresponding code may be 2), a medium computing density level (a corresponding code may be 3), a medium-and-high computing density level (a corresponding code may be 4), and a high computing density level (a corresponding code may be 5). In addition, a zero computing density level (a corresponding code may be 0) may also be set for representing a computing density level when the computing unit stops running or no task or no instruction is executed. In this embodiment, one example of the first-stage warming-up command may be {0, 3, 1000}, which may indicate that the computing density of the computing unit needs to be linearly or stepwise increased gradually (e.g., by one or more gradually increasing immediate values 803) from the zero computing density level at which no instruction is executed to the medium computing density level within 1000 clock cycles.

Instruction fetching may be then waited in step 1005. Next, in step 1006, a computing density level (e.g., a target computing density level) corresponding to an instruction to be executed subsequently may be determined according to the current task identifier wave_cur_id and the next task identifier wave_nxt_id and the like (or according to the statistical information of all instructions to be processed that have been fetched or the instructions to be processed in the tasks), and then a second-stage computing density warming-up level may be determined according to the current computing density level and the target computing density level in step 1007.

The second-stage computing density warming-up level may be a difference between the current computing density level and the target computing density level. The current computing density level may be directly obtained from the current power consumption or the current running state of the computing unit. The target computing density level may be determined by averaging or weighted averaging of the instructions to be processed. For example, assuming that the instructions to be processed are determined to include 10 low-density operation instructions, 20 medium-and-low-density operation instructions, 50 medium-density operation instructions, 30 medium-and-high-density operation instructions, and 20 high-density operation instructions according to the current task identifier wave_cur_id and the next task identifier wave_nxt_id as well as the statistical information shown above in combination with Fig. 5 and Fig. 7, etc., the target computing density level may be determined in the following manner of weighted averaging and then rounding, i.e., floor((10*1+20*2+50*3+30*4+20*5)/(10+20+50+30+20))=floor(3.23)=3, wherein floor() is a round-down function. That is, the code corresponding to the target computing density level determined by the above formula is 3 (the medium computing density level). In other embodiments, the current computing density level and the target computing density level (and corresponding codes thereof) may also be determined by rounding up and other computing methods, which will not be limited herein.

A second-stage warming-up command may be then sent in step 1008 to warm-up the power consumption (equivalently, or the current or the computing density) of the computing unit to an expected level (e.g., the target computing density level, which may also be referred to as a first computing density level herein). A format of the second-stage warming-up command may be the same as that of the first-stage warming-up command. For example, assuming that the current computing density level is the medium computing density level (the corresponding code is 3) and the target computing density level determined by the method described above is the high computing density level (the corresponding code is 5), the second-stage warming-up command may be {3, 5, 500}, which may indicate that the computing density of the computing unit needs to be linearly or stepwise increased gradually (e.g., by one or more gradually increasing immediate values 803) from the medium computing density level to the high computing density level within 500 clock cycles.

In step 1009, whether all tasks and/or all instructions have been executed completely may be determined. If the instructions are not executed completely, steps 1006 to 1008 may be performed circularly until the instructions of all the tasks have been executed completely. For example, whether all the tasks and/or all the instructions have been executed completely may be determined according to predetermined clock cycle in step 1009. In some embodiments, at each determination time point, if it is determined that there is still an instruction needing to be executed, a new target computing density level may be determined based on the instructions to be processed included in the current task and/or next task in steps 1006 to 1008, and corresponding warming-up is performed before actually executing these instructions to be processed (e.g., during acquiring an operand involved in these instructions to be processed). By using the processing manner, the computing density level of the computing unit may also be adaptively preadjusted based on instructions to be executed (e.g., unfinished instructions included in the current task and the instructions to be processed included in next task) in the task execution process. Thus, the influence of a suddenly increasing DIDT on the performance of the chip is further avoided.

In step 1010, after all the tasks and instructions have been executed completely, a stretching command may be sent to linearly or stepwise reduce the power consumption of the computing unit gradually (e.g., by one or more gradually decreasing immediate values 803) to a set level (which may also be referred to as a second computing density level herein), e.g., the zero computing density level described above. After the stretching command is sent, the process 1000 may return back to step 1003 to wait for next task set. A format of the stretching command may be the same as or different from the format of the warming-up command.

As described above, the command 911 (e.g., the first-stage warming-up command, the second-stage warming-up command, or the stretching command) sent by the control core 901 may arrive at the immediate value generation module 906. After accepting the command 911, the immediate value generation module 906 may search in the immediate value database 907 according to the current computing density level and the target computing density level, to obtain one or more pieces of immediate value data corresponding to gradually changing of the computing density (e.g., the desired computing density stepwise increase or decrease gradually), and the data is gradually fetched and released based on corresponding clock timing or clock period, and provided to the computing unit 206 by using the structure as shown in Fig. 8 for warming-up or stretching the running state of the computing unit 206.

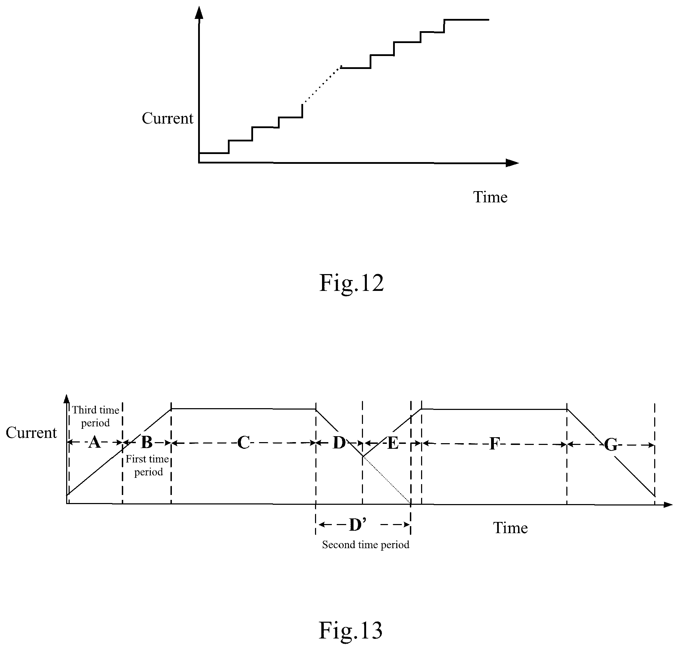

Fig. 12 illustrates a changing chart of a current over time of a computing unit 206 at a warming-up stage according to an embodiment of the present disclosure. As shown in Fig. 12, the change over time of the current of the computing unit 206 may be stepped as a whole. A plurality of corresponding immediate values may be released or provided using an M/N frequency division method. Herein, M may be the number of clock cycles required at the warming-up stage, which may be directly obtained from the sent command 911. N is the number of orders required from the current computing density level to the target computing density level. How N is calculated will be described below.

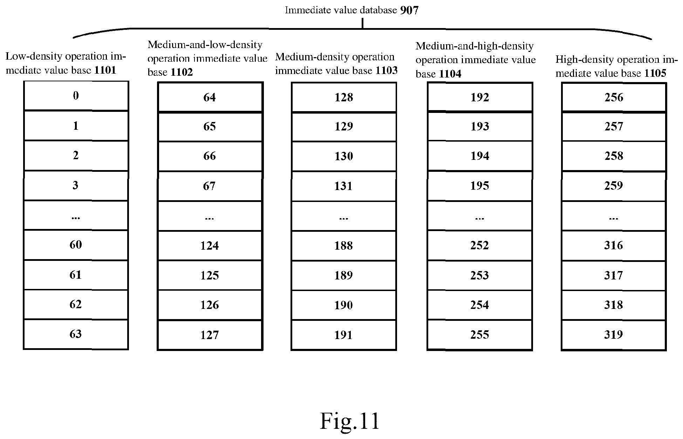

Fig. 11 illustrates an example of an immediate value database 907 according to an embodiment of the present disclosure. The immediate value database 907 may be obtained by modeling and simulating the power consumption of the computing unit. Generally, in case of a given frequency and process, the power consumption of the computing unit is mainly affected by a bit width, an operand, and an accuracy. When the immediate value database 907 is modeled, the computing density levels of the instructions may be distinguished according to the bit width and the accuracy. For example, 5 corresponding sub-databases are established in accordance with five instruction accuracies of Int8, FP8, FP16, FP32, and FP64, respectively, i.e., a low-density operation immediate value base 1101, a medium-and-low-density operation immediate value base 1102, a medium-density operation immediate value base 1103, a medium-and-high-density operation immediate value base 1104, and a high-density operation immediate value base 1105. The 5 sub-databases may correspond to the low computing density level (the corresponding code may be 1), the medium-and-low computing density level (the corresponding code may be 2), the medium computing density level (the corresponding code may be 3), the medium-and-high computing density level (the corresponding code may be 4), and the high computing density level (a corresponding code may be 5) as described above, respectively. Moreover, within each computing density, different operands correspond to different power consumption. Therefore, during modeling, 64 immediate values may be further stepwise selected according to the corresponding power consumption at each computing density, thereby forming an entire data model. That is, a total of 320 immediate values are included with corresponding serial numbers being 0, 1, 2, ..., 319, as shown in Fig. 11. In some embodiments, each of the serial numbers 0, 1, 2, ..., 319 may correspond to one immediate value or a set of immediate values. To simplify the description, it is assumed that each serial number corresponds to one immediate value below.

For example, if the command 911 sent by the control core 901 is {0, 3, 1000}, it indicates that the computing density of the computing unit needs to be linearly or stepwise increased gradually from the zero computing density level at which no instruction is executed to the medium computing density level within 1000 clock cycles. At this point, this may be achieved by relatively averagely providing a plurality of immediate values having gradually stepwise increasing corresponding computing densities to the computing unit within 1000 clock cycles. For example, assuming that the medium computing density level is represent by a value at a middle position (i.e., the 32th immediate value) in the medium-density operation immediate value base 1103, the plurality of immediate values may be a total of 64+64+32=160 (i.e., N described above) immediate values from the first immediate value (with the serial number of 0) in the low-density operation immediate value base 1101 to the 32th immediate value (with the serial number of 159) in the medium-density operation immediate value base 1103. At this point, the immediate value generation module 906 may uniformly search for, replace and output data for 160 times within 1000 clock cycles. The power consumption of the computing unit is stepwise increased gradually to the middle level of the medium computing density, as shown in Fig. 12, so that a device such as a voltage regulator (VR) of the chip can respond in time.

In another example, if the command 911 (which may be the warming-up command or the stretching command) sent by the control core 901 is {2, 4, 500}, it indicates that the computing density of the computing unit needs to be linearly or stepwise increased gradually from the medium-and-low computing density level to the medium-and-high computing density level within 500 clock cycles. At this point, this may be achieved by relatively averagely providing a plurality of immediate values having gradually stepwise increasing corresponding computing density to the computing unit within 500 clock cycles. For example, assuming that the computing density level is represent by a value at a middle position (i.e., the 32th immediate value) in each computing density level, the plurality of immediate values may be a total of 32+64+32=128 immediate values from the 32th immediate value (with the serial number of 95) in the medium-and-low-density operation immediate value base 1102 to the 32th immediate value (with the serial number of 223) in the medium-and-high-density operation immediate value base 1104. At this point, the immediate value generation module 906 may uniformly search for, replace and output data for 128 times within 500 clock cycles. The power consumption of the computing unit is stepwise increased gradually to the medium level of the medium-and-high computing density. In other embodiments, the computing density level may also be further subdivided. For example, in one-to-one correspondence with the 320 immediate values included in the immediate value database 907 as shown in Fig. 11, the computing density may be further subdivided into 320 computing density levels. At this point, a first immediate value of the plurality of immediate values provided to the computing unit may directly correspond to the current computing density level, and the last immediate value may directly correspond to the target computing density level.

Fig. 13 illustrates a current condition of a computing unit in a running process after processing by a DIDT control unit according to an embodiment of the present disclosure. As shown in Fig. 13, after the DIDT control of the embodiments of the present disclosure, the current of the entire circuit rises slowly, avoiding the DIDT from increasing suddenly. In the figure, A represents a current change in the circuit at the first stage warming-up; B represents a current change in the circuit at the second stage warming-up; C represents the current of the computing unit when performing a normal computation (according to different computation numbers, the current might change within a certain range with a small amplitude); and D or D' is a chart of stretching after completion of execution of one task set. If a new task set arrives (e.g., arrives and will be processed by the computing unit) during the stretching process, E represents a stage of warming-up again for a new task set; F represents a normal computing stage for the new task set; and G represents a stretching stage after the completion of the computation of the new task set (assuming that there is no new task set arriving). As described above, herein, a time period corresponding to A may also be referred to as a third time period; a time period corresponding to B may also be referred to as a first time period; a time period corresponding to D or D' or G may also be referred to as a second time period; and a time period corresponding to E may also be referred to as a fourth time period. It should be appreciated that in some embodiments, warming-up at the second stage as shown by B in the figure may be directly started without warming-up at the first stage as shown by A in the figure.

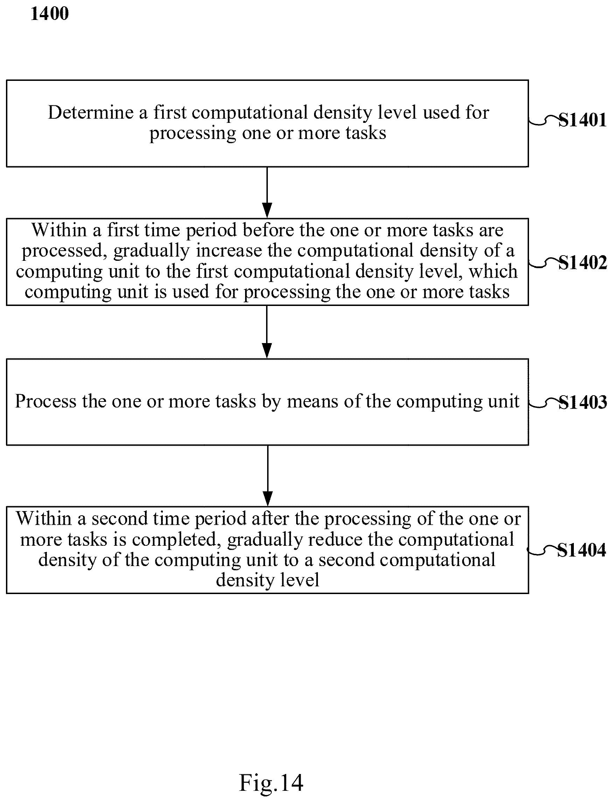

Next, Fig. 14 illustrates a method 1400 for task processing according to an embodiment of the present disclosure.

As shown in Fig. 14, the method 1400 for task processing according to the embodiments of the present disclosure may include: in step S1401, determining a first computing density level for processing one or more tasks; in step S1402, gradually increasing a computing density of a computing unit for processing the one or more tasks to the first computing density level within a first time period before processing the one or more tasks; in step S1403, processing the one or more tasks by the computing unit; and in step S1404, gradually reducing the computing density of the computing unit to a second computing density level within a second time period after completion of processing the one or more tasks.

In some embodiments, one or more tasks may be one or more second tasks as described above, or a task set including one or more tasks. The first computing density level may be a target computing density level to which the computing unit for processing the one or more tasks is expected to be warmed-up. The first time period may be a time period (e.g., a second warming-up time period shown by B in Fig. 13) for warming-up a running state of the computing unit, and the second time period may be a time period for stretching the running state of the computing unit. In another aspect, the first time period may be a time period in which instructions to be processed included in the one or more tasks are acquired.

In some embodiments, determining the first computing density level for processing the one or more tasks may include: determining a classified statistic number of instructions to be processed included in the one or more tasks according to a predetermined category; and determining the first computing density level for processing the one or more tasks based on the classified statistic number.

As described above, in some embodiments, the predetermined category may include one or more of: a low-density operation instruction, a medium-and-low-density operation instruction, a medium-density operation instruction, a medium-and-high-density operation instruction, and a high-density operation instruction.

In some embodiments, the method 1400 may further include: gradually increasing the computing density of the computing unit to a preset third computing density level within a third time period prior to the first time period. The third time period may be the first warming-up time period shown by A in Fig. 13.

In some embodiments, gradually increasing the computing density of the computing unit for processing the one or more tasks to the first computing density level within the first time period before processing the one or more tasks may include: within the first time period, successively providing the computing unit with one or more pieces of first preset data having gradually increasing computing densities for processing by the computing unit, wherein a first piece of first preset data of the one or more pieces of first preset data may correspond to a current computing density level of the computing unit, and the last piece of first preset data of the one or more pieces of first preset data may correspond to the first computing density level. For example, as described above in conjunction with FIGS. 10 to 12, the one or more pieces of first preset data may be one or more immediate values from an immediate value database 907 (or prestored in the immediate value database 907).

In some embodiments, gradually reducing the computing density of the computing unit to the second computing density level within the second time period after completion of processing the one or more tasks may include: within the second time period, successively providing the computing unit with one or more pieces of second preset data having gradually decreasing computing densities for processing by the computing unit, wherein a first piece of second preset data of the one or more pieces of second preset data may correspond to the current computing density level of the computing unit, and the last piece of second preset data of the one or more pieces of second preset data may correspond to the second computing density level. For example, as described above in conjunction with FIGS. 10 to 12, the one or more pieces of second preset data may be one or more immediate values from an immediate value database 907 (or prestored in the immediate value database 907).

In some embodiments, the method 1400 may further include: when one or more new tasks arrive within the second time period, stopping gradually reducing the computing density; and gradually increasing the computing density of the computing unit to a fourth computing density level within a fourth time period starting from a time of stopping gradually reducing the computing density. In some embodiments, the fourth computing density level may be a computing density level for processing the one or more new tasks.

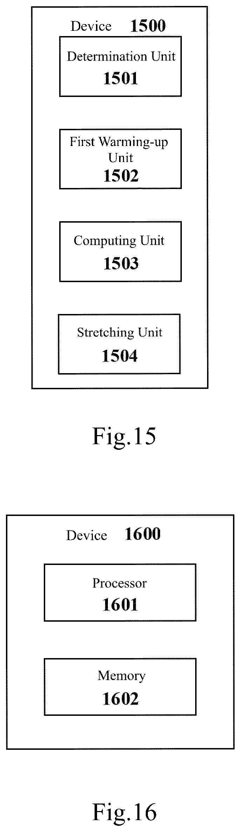

Fig. 15 illustrates a schematic diagram of a device 1500 for task processing according to an embodiment of the present disclosure.

As shown in Fig. 15, the device 1500 for task processing according to the embodiments of the present disclosure may include: a determination unit 1501 configured to determine a first computing density level for processing one or more tasks; a first warming-up unit 1502 configured to gradually increase a computing density of a computing unit for processing the one or more tasks to the first computing density level within a first time period before processing the one or more tasks; a computing unit 1503 configured to process the one or more tasks by the computing unit; and a stretching unit 1504 configured to gradually reduce the computing density of the computing unit to a second computing density level within a second time period after completion of processing the one or more tasks.

In some embodiments, one or more tasks may be one or more tasks or second tasks as described above, or a task set including one or more tasks. The first computing density level may be a target computing density level to which the computing unit for processing the one or more tasks is expected to be warmed-up. The first time period may be a time period (e.g., a second warming-up time period shown by B in Fig. 13) for warming-up a running state of the computing unit, and the second time period may be a time period for stretching the running state of the computing unit. In another aspect, the first time period may be a time period in which instructions to be processed included in the one or more tasks are acquired.

In some embodiments, the determination unit 1501 is configured to determine the first computing density level for processing the one or more tasks, which may include: determining a classified statistic number of instructions to be processed included in the one or more tasks according to a predetermined category; and determining the first computing density level for processing the one or more tasks based on the classified statistic number.

As described above, in some embodiments, the predetermined category may include one or more of: a low-density operation instruction, a medium-and-low-density operation instruction, a medium-density operation instruction, a medium-and-high-density operation instruction, and a high-density operation instruction.

In some embodiments, the device 1500 may further include: a second warming-up unit configured to gradually increase the computing density of the computing unit to a preset third computing density level within a third time period prior to the first time period. The third time period may be the first warming-up time period shown by A in Fig. 13.

In some embodiments, the first warming-up unit 1502 is configured to gradually increase the computing density of the computing unit for processing the one or more tasks to the first computing density level within the first time period before processing the one or more tasks, which may include: within the first time period, successively providing the computing unit with one or more pieces of first preset data having gradually increasing computing densities for processing by the computing unit, wherein a first piece of first preset data of the one or more pieces of first preset data may correspond to a current computing density level of the computing unit, and the last piece of first preset data of the one or more pieces of first preset data may correspond to the first computing density level. For example, as described above in conjunction with FIGS. 10 to 12, the one or more pieces of first preset data may be one or more immediate values from an immediate value database 907 (or prestored in the immediate value database 907).

In some embodiments, the stretching unit 1504 is configured to gradually reduce the computing density of the computing unit to the second computing density level within the second time period after completion of processing the one or more tasks, which may include: within the second time period, successively providing the computing unit with one or more pieces of second preset data having gradually decreasing computing densities for processing by the computing unit, wherein a first piece of second preset data of the one or more pieces of second preset data may correspond to the current computing density level of the computing unit, and the last piece of second preset data of the one or more pieces of second preset data may correspond to the second computing density level. For example, as described above in conjunction with FIGS. 10 to 12, the one or more pieces of second preset data may be one or more immediate values from an immediate value database 907 (or prestored in the immediate value database 907).

In some embodiments, the stretching unit 1504 may be further configured to: when one or more new tasks arrive within the second time period, stop gradually reducing the computing density. In some embodiments, the first warming-up unit 1502 may be further configured to gradually increase the computing density of the computing unit to a fourth computing density level within a fourth time period starting from a time of stopping gradually reducing the computing density. In some embodiments, the fourth computing density level may be a computing density level for processing the one or more new tasks.

Fig. 16 illustrates a schematic diagram of another device 1600 for task processing according to an embodiment of the present disclosure.

As shown in Fig. 16, the device 1600 for task processing according to the embodiments of the present disclosure may include at least one processor 1601 and a memory 1602. At least one program may be stored in the memory 1602. The at least one program, when executed by the at least one processor 1601, may cause the at least one processor 1601 to implement any method according to the embodiments of the present disclosure, such as the above method 1400 for task processing and any other methods described in conjunction with Fig. 1 to Fig. 14.

Moreover, an embodiment of the present disclosure further provides an electronic apparatus. The electronic apparatus may include a device 1500 or 1600 for task processing according to the embodiments of the present disclosure, and may perform or implement any method according to the embodiments of the present disclosure, such as the above method 1400 for task processing and any other methods described in conjunction with Fig. 1 to Fig. 14.

It should be appreciated that the steps in the methods or processes of the present disclosure described in conjunction with the drawings are merely examples, and any of them may be deleted from the corresponding method or process, added to other methods or processes, combined with each other in any manner, or performed in any suitable order.

Particularly, according to the embodiments of the present disclosure, the methods or processes described above in conjunction with the embodiments of the present disclosure or the drawings may be implemented as computer software programs. For example, an embodiment of the present disclosure includes a computer program product including a computer program carried by a non-transitory computer-readable medium. The computer program includes a program code for executing the method shown in the flowchart. In such an embodiment, the computer program may be downloaded online through a communication device and installed, or installed from a memory, or installed from an ROM. When the computer program is executed by a processing device, the functions defined in the methods of the embodiments of the present disclosure are executed.

Moreover, an embodiment of the present disclosure provides a computer-readable storage medium on which instructions are stored. The instructions, when executed, cause a processor to perform any method for task processing according to the embodiments of the present disclosure.

The flowcharts and block diagrams in the accompanying drawings illustrate architectures, functions, and operations of possible implementations of the system, method, and computer program product according to various embodiments of the present disclosure. In this regard, each block in the flowcharts or block diagrams may represent a module, a program segment or a part of code, and the module, the program segment or the part of code includes one or more executable instructions for implementing specified logic functions. It should also be noted that in some alternative implementations, the functions marked in the blocks may alternatively occur in a different order from that marked in the drawings. For example, two successively shown blocks actually may be executed in parallel substantially, or may be executed in reverse order sometimes, depending on the functions involved. It should also be noted that each block in the flowcharts and/or block diagrams and combinations of the blocks in the flowcharts and/or block diagrams may be implemented by a dedicated hardware-based system for executing specified functions or operations, or may be implemented by a combination of dedicated hardware and computer instructions.

Related units described in the embodiments of the present disclosure may be implemented by software, or may be implemented by hardware. The name of a unit does not constitute a limitation on the unit itself.

The functions described above herein may be performed at least in part by one or more hardware logic components. For example, exemplary types of hardware logic components that can be used without limitations include a field programmable gate array (FPGA), an application specific integrated circuit (ASIC), an application specific standard product (ASSP), a system on chip (SOC), a complex programmable logic device (CPLD), and the like.

In the context of the present disclosure, a machine-readable medium may be a tangible medium that may include or store a program for use by or in combination with an instruction execution system, device or apparatus. The machine-readable medium may be a machine-readable signal medium or a machine-readable storage medium. The machine-readable medium may include but be not limited to an electronic, magnetic, optical, electromagnetic, infrared, or semiconductor system, device or apparatus, or any appropriate combination thereof. More specific examples of the machine-readable storage medium include: an electrical connection based on one or more wires, a portable computer disk, a hard disk, a random access memory (RAM), a read-only memory (ROM), an erasable programmable ROM (an EPROM or a flash memory), an optical fiber, a portable compact disc read-only memory (CD-ROM), an optical storage device, a magnetic storage device, or any suitable combination thereof.

The above description is only optional embodiments of the present disclosure and illustrates the technical principles used. It should be understood that the disclosure scope involved in the present disclosure shall not be limited to a technical solution by specifically combining the above mentioned technical features, but shall also cover other technical solutions formed by any combination of the above mentioned technical features or their equivalents without being separated from the above technical concept. For example, the above features and the technical feature having similar functions disclosed in the present disclosure (but not limited to) are replaced with each other to form the technical solution.

In addition, although operations are described in a particular order, this should not be understood as requiring these operations to be performed in the particular order shown or in a sequential order. In certain circumstances, multi-task and parallel processing may be beneficial. Similarly, although a plurality of specific implementation details are included in the above description, these should not be interpreted as limiting the scope of the present disclosure. Certain features described in the context of individual embodiments may also be combinatorically implemented in a single embodiment. Conversely, various features described in the context of a single embodiment may also be implemented in a plurality of embodiments individually or in any suitable subcombination.

Although the subject matter has been described by using language specific to structural features and/or method logic actions, it should be understood that the subject matter defined in the attached claims is not necessarily limited to the specific features or actions described above. Rather, the specific features and actions described above are merely example forms of implementing claims.

## Claims

1. A method for task processing, comprising:
determining a first computing density level for processing one task or a plurality of tasks;
gradually increasing a computing density of a computing unit for processing the one task or the plurality of tasks to the first computing density level within a first time period before processing the one task or the plurality of tasks;
processing the one task or the plurality of tasks by the computing unit; and
gradually reducing the computing density of the computing unit to a second computing density level within a second time period after completion of processing the one task or the plurality of tasks.

2. The method according to claim 1, wherein the determining a first computing density level for processing one task or a plurality of tasks comprises:
determining a classified statistic number of instructions to be processed comprised in the one task or the plurality of tasks according to a predetermined category; and
determining the first computing density level for processing the one task or the plurality of tasks based on the classified statistic number.

3. The method according to claim 2, wherein the predetermined category comprises one or more of:
a low-density operation instruction, a medium-and-low-density operation instruction, a medium-density operation instruction, a medium-and-high-density operation instruction, and a high-density operation instruction.

4. The method according to any one of claims 1 to 3, further comprising:
gradually increasing the computing density of the computing unit to a preset third computing density level within a third time period before the first time period.

5. The method according to any one of claims 1 to 4, wherein the first time period is a time period for acquiring the instructions to be processed comprised in the one task or the plurality of tasks.

6. The method according to any one of claims 1 to 5, wherein the gradually increasing a computing density of a computing unit for processing the one task or the plurality of tasks to the first computing density level within a first time period before processing the one task or the plurality of tasks comprises:
within the first time period, successively providing the computing unit with one or more pieces of first preset data having gradually increasing computing densities for processing by the computing unit, wherein a first piece of first preset data of the one or more pieces of first preset data corresponds to a current computing density level of the computing unit, and a last piece of first preset data of the one or more pieces of first preset data corresponds to the first computing density level.

7. The method according to claim 6, wherein the one or more pieces of first preset data are prestored in a database.

8. The method according to any one of claims 1 to 7, wherein the gradually reducing the computing density of the computing unit to a second computing density level within a second time period after completion of processing the one task or the plurality of tasks comprises:
within the second time period, successively providing the computing unit with one or more pieces of second preset data having gradually decreasing computing densities for processing by the computing unit, wherein a first piece of second preset data of the one or more pieces of second preset data corresponds to the current computing density level of the computing unit, and a last piece of second preset data of the one or more pieces of second preset data corresponds to the second computing density level.

9. The method according to claim 8, wherein the one or more pieces of second preset data are prestored in a database.

10. The method according to any one of claims 1 to 9, further comprising:
when one or more new tasks arrive within the second time period, stopping gradually reducing the computing density; and
gradually increasing the computing density of the computing unit to a fourth computing density level within a fourth time period starting from a time of stopping gradually reducing the computing density,
wherein the fourth computing density level is a computing density level for processing the one or more new tasks.

11. A device for task processing, comprising:
a determination unit, configured to determine a first computing density level for processing one task or a plurality of tasks;
a first warming-up unit, configured to gradually increase a computing density of a computing unit for processing the one task or the plurality of tasks to the first computing density level within a first time period before processing the one task or the plurality of tasks;
a computing unit, configured to process the one task or the plurality of tasks by the computing unit; and
a stretching unit, configured to gradually reduce the computing density of the computing unit to a second computing density level within a second time period after completion of processing the one task or the plurality of tasks.

12. The device according to claim 11, wherein the determination unit is configured to determine the first computing density level for processing one task or a plurality of tasks, which comprises:
determining a classified statistic number of instructions to be processed comprised in the one task or the plurality of tasks according to a predetermined category; and
determining the first computing density level for processing the one task or the plurality of tasks based on the classified statistic number.

13. The device according to claim 12, wherein the predetermined category comprises one or more of:
a low-density operation instruction, a medium-and-low-density operation instruction, a medium-density operation instruction, a medium-and-high-density operation instruction, and a high-density operation instruction.

14. The device according to any one of claims 11 to 13, further comprising:
a second warming-up unit, configured to gradually increase the computing density of the computing unit to a preset third computing density level within a third time period before the first time period.

15. The device according to any one of claims 11 to 14, wherein the first time period is a time period for acquiring the instructions to be processed comprised in the one task or the plurality of tasks.

16. The device according to any one of claims 11 to 15, wherein the first warming-up unit is configured to gradually increase the computing density of the computing unit for processing the one task or the plurality of tasks to the first computing density level within the first time period before processing the one task or the plurality of tasks, which comprises:
within the first time period, successively providing the computing unit with one or more pieces of first preset data having gradually increasing computing densities for processing by the computing unit, wherein a first piece of first preset data of the one or more pieces of first preset data corresponds to a current computing density level of the computing unit, and a last piece of first preset data of the one or more pieces of first preset data corresponds to the first computing density level.

17. The device according to any one of claims 11 to 16, wherein the stretching unit is configured to gradually reduce the computing density of the computing unit to the second computing density level within the second time period after completion of processing the one task or the plurality of tasks, which comprises:
within the second time period, successively providing the computing unit with one or more pieces of second preset data having gradually decreasing computing densities for processing by the computing unit, wherein a first piece of second preset data of the one or more pieces of second preset data corresponds to the current computing density level of the computing unit, and a last piece of second preset data of the one or more pieces of second preset data corresponds to the second computing density level.

18. The device according to any one of claims 11 to 17, wherein the stretching unit is further configured to:
when one or more new tasks arrive within the second time period, stop gradually reducing the computing density; and
the first warming-up unit is further configured to: gradually increase the computing density of the computing unit to a fourth computing density level within a fourth time period starting from a time of stopping gradually reducing the computing density,
wherein the fourth computing density level is a computing density level for processing the one or more new tasks.

19. A device for task processing, comprising:
at least one processor; and
a memory in which at least one program is stored, wherein the at least one program, when executed by at least one processor, causes the at least one processor to implement the method according to any one of claims 1 to 10.

20. An electronic apparatus, comprising the device for task processing according to any one of claims 11 to 18 or claim 19.

21. A non-transient storage medium comprising computer executable instructions, wherein the computer executable instructions, when executed by a computer processor, cause the method according to any one of claims 1 to 10 to be performed.
